# EUROPEAN PATENT SPECIFICATION

(11) **EP 1 021 871 B1**
(45) Date of publication and mention of the grant of the patent: **17.01.2007**
(21) Application number: 98946501.8
(22) Date of filing: 30.09.1998
(51) Int. Cl.: H04B 7/08

(54) **METHOD FOR IMPROVING RADIO CONNECTION QUALITY IN A RADIO SYSTEM**
VERFAHREN ZUR VERBESSERUNG DER FUNKVERBINDUNGSQUALITÄT IN EINEM FUNKSYSTEM
PROCEDE D'AMELIORATION DE LA QUALITE D'UNE CONNEXION RADIO DANS UN SYSTEME RADIO

(30) Priority: 30.09.1997 FI 973849
(43) Date of publication of application: 26.07.2000
(73) Proprietor: Nokia Corporation, 02150 Espoo (FI)
(72) Inventor: PIIRAINEN, Olli, FIN-90100 Oulu (FI)
(74) Representative: Antila, Harri Jukka Tapani
(86) International application number: PCT/FI1998/000774
(87) International publication number: WO 1999/017465

(56) References cited:
- EP-A1- 0 650 268
- WO-A1-95/26116
- GB-A- 2 262 863

## Description

### FIELD OF THE INVENTION

The invention relates to a method for improving radio connection quality in a radio system comprising a base station system, a subscriber terminal and a radio connection using space diversity between the base station system and the subscriber terminal.

### BACKGROUND OF THE INVENTION

A problem with the above arrangement is that space diversity is either used or not. For example, transceivers in a base station include required space diversity HW (hardware), the use of which can in general be switched on or off using a service-like measure. There is no method that can dynamically decide how to use space diversity. This causes many drawbacks. Compromises have to be made concerning equipment costs, capacity and radio connection quality of the base station, because the use of space diversity can improve the quality of poor radio connections, but at the same time cause additional costs and decrease base station capacity.

GB 2 262 863 discloses a method for provision of diversity in reception, utilizing several narrow-band receivers connected to different antennas.

Another problem is how to realize space diversity economically using wide-band transceivers

### BRIEF DESCRIPTION OF THE INVENTION

The present invention seeks to provide an improved method for improving radio connection quality in a radio system, and an improved base station system.

According to an aspect of the present invention, there is provided a method for improving radio connection quality in a radio system as specified in claim 1.

According to another aspect of the present invention, there is provided a base station system as specified in claim 7.

The invention is based on the fact that space diversity can if necessary be dynamically implemented on a particular radio connection, and space diversity can be reduced when the radio connection allows it.

Several advantages are achieved with the method and system of the invention. The system of the invention efficiently utilizes the HW/SW (hardware/software) capacity of the radio system to improve radio connection quality. On the other hand successful compromises can be made regarding the quality and number of the radio connections.

Space diversity can be realized economically using wide-band transceivers.

### BRIEF DESCRIPTION OF THE DRAWINGS

In the following the invention will be described in greater detail in connection with the preferred embodiments with reference to the accompanying drawings, in which
Figure 1 shows an example of a radio system,
Figure 2 shows one base station transceiver,
Figure 3 shows an arrangement providing space diversity,
Figure 4A shows frequency ranges of a broadband receiver,
Figure 4B shows frequency ranges of a narrowband receiver.

### DETAILED DESCRIPTION OF THE INVENTION

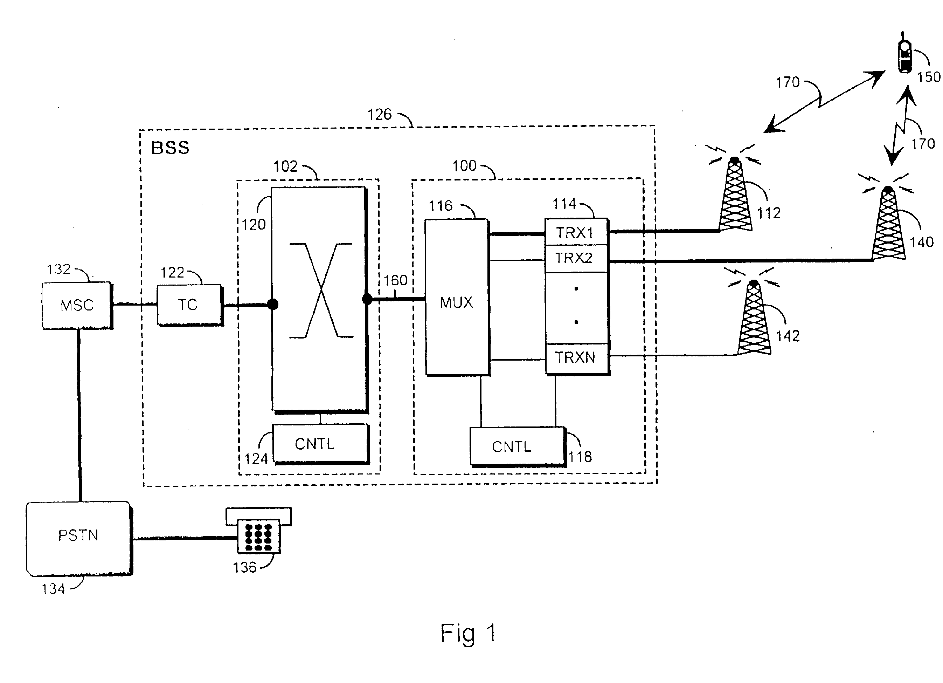

With reference to Figure 1 a typical structure of the radio system of the invention is described. Figure 1 includes only the blocks essential for describing the invention, but for one skilled in the art it is obvious that a conventional radio system also comprises other functions and structures, the detailed description of which is not necessary in this context. The invention is applicable to be used, for example, in cellular networks such as the GSM1800 and GSM 1900 systems.

The book Gordon L. Stüber: Principles of Mobile Communication, Kluwer Academic Publishers 1996, ISBN 0-7923-9732-0 presents different diversity techniques on pages 238-239. Diversity refers to an efficient solution to problems caused by fadings on radio paths utilizing the principle that several faded copies are received from the same information bearing signal. In the book different diversity techniques are divided into seven categories according to the methods needed to achieve the techniques:
1. Space diversity is achieved by using a plurality of antennas, the distance between the antennas being selected so that the fadings in different diversity branches cannot correlate with one another.
2. Angle diversity or direction diversity requires several directional antennas, each of which receiving radio waves at a narrow angle, whereby uncorrelated branches are obtained.
3. Polarization diversity utilizes the property that an environment scattering the signal also depolarizes the signal. Then antennas having different polarizations again obtain diversity.
4. Field diversity is based on the fact that electric and magnetic field components are uncorrelated. The disadvantage is that then the front ends of the receiver have to be duplicated.
5. Frequency diversity is achieved by using several channels separated by a frequency bandwidth of at least one channel. For example, in the GSM system this is 200 kHz. This is not a practical solution due to the worthiness of the frequency band.
6. Multipath diversity is implemented by solving multipath signal components at different delays by using direct sequence spread spectrum signalling and a RAKE receiver.
7. Time diversity is achieved by using a plurality of time slots that are separated by at least the coherence time of the channel. The coherence time depending on the velocity of the subscriber terminal poses a problem. A slow moving subscriber terminal has a large coherence time, the signals then obtaining a too long delay when using time diversity.

The present invention is applicable to be used in categories 1, 2, 3 and 4. Space diversity is considered to be the basic idea, whose particular forms are angle, polarization and field diversities. In order to be simple space diversity is used as the common name in the description and the claims, but it refers to all four different diversity forms presented above.

A cellular network typically comprises a fixed network infrastructure, or a network part, and subscriber terminals 150 that can be fixedly located, vehicle mounted or portable terminals. The network part includes base stations 100. Several base stations 100 are, in turn, under the centralized control of a base station controller 102 connected thereto. The base station 100 includes transceivers 114, typically one to sixteen transceivers 114. One transceiver 114 offers radio capacity to one TDMA frame, i.e. typically to eight time slots.

The base station 100 comprises a control unit 118 controlling the function of the transceivers 114 and a multiplexer 116. The multiplexer 116 locates the traffic and control channels used by several transceivers 114 to a transfer connection 160. The structure of the transfer connection 160 is accurately determined and referred to as an Abis interface. The transfer connection 160 is typically implemented using a 2 Mbit/s connection, or a pulse coded modulation link (PCM link) offering a 31 x 64 kbit/s transfer capacity, while time slot 0 is reserved for synchronization.

There is a connection from the transceivers 114 of the base station 100 to an antenna unit 112, by which a bi-directional radio connection 170 is implemented to a subscriber terminal 150. The structure of frames to be transferred is accurately determined also on the bi-directional radio connection 170 and is referred to as air interface. The subscriber terminal 150 can be, for example, a conventional GSM mobile phone.

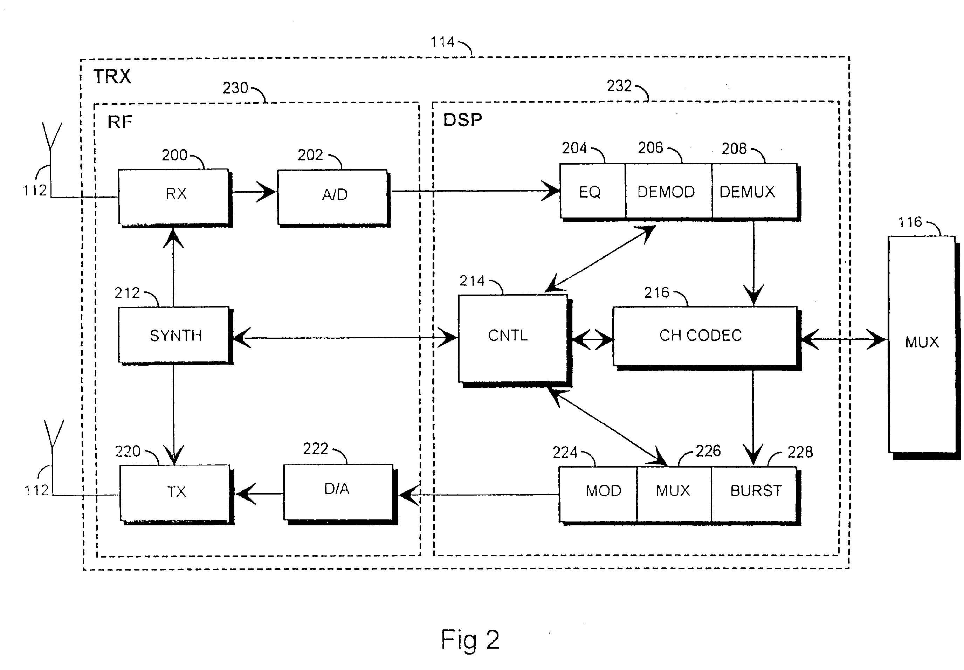

Figure 2 describes the structure of one transceiver 114 in greater detail. A receiver 200 comprises a filter obstructing frequencies outside a desired frequency band. Thereafter the signal is converted to an intermediate frequency or directly to a base frequency, in which form the signal is sampled and quantized in an analogue-to-digital converter 202. An equalizer 204 compensates interference, for example, interference caused by multipath propagation. A demodulator 206 takes from an equalized signal a bit flow which is transmitted to a demultiplexer 208. The demultiplexer 208 separates the bit flow from different time slots into specific logical channels. A channel codec 216 decodes the bit flow of different logical channels, i.e. decides whether the bit flow is signalling information transmitted to a control unit 214, or whether the bit flow is speech transmitted to a speech codec 122 of the base station controller 102. The channel codec 216 also performs error correction. The control unit 214 performs inner control duties by controlling different units. A burst former 228 adds a training sequence and a tail to the data arriving from the channel codec 216. The multiplexer 226 indicates a time slot to each burst. A modulator 224 modulates the digital signals to a radio frequency carrier. This function is analogic by nature and therefore a digital-to-analogue converter 222 is needed to perform the function. A transmitter 220 comprises a filter limiting the bandwidth. In addition the transmitter 220 controls the output power of the transmission. A synthesizer 212 arranges the required frequencies to different units. A clock included in the synthesizer 212 can be locally controlled or it may be under the centralized control from somewhere else, for example, from the base station controller 102. The synthesizer 212 creates the needed frequencies, for example, by a voltage-controlled oscillator.

Figure 2 shows how the transceiver structure can be further divided into radio frequency parts 230 and a digital signal processing processor including software 232. The radio frequency parts 230 comprise the receiver 200, the analogue-to-digital converter 202, the digital-to-analogue converter 222, the transmitter 220 and the synthesizer 212. The digital signal processing processor including software 232 comprises the equalizer 204, the demodulator 206, the demultiplexer 208, the channel codec 216, the control unit 214, the burst former 228, the multiplexer 226 and the modulator 224.

The base station controller 102 comprises a group switching network 120 and a control unit 124. The group switching network 120 is used to switch speech and data and to connect signalling circuits. A base station subsystem 126 composed of the base station 100 and the base station controller 102 also includes a transcoder 122. The transcoder 122 is generally located as close as possible to a mobile services switching centre 132, since speech can then be transferred saving transfer capacity in cellular network form between the transcoder 122 and the base station controller 102.

The transcoder 122 converts the various digital coding forms of speech used between a public switched telephone network and a cellular network to suit one another, for example, from a 64 kbit/s fixed network form to another (e.g. 13 kbit/s) cellular network form and vice versa. The control unit 124 performs call control, mobility management, statistical data collection and signalling.

Figure 1 shows that the group switching network 120 can perform connections (indicated by black balls) to a public switched telephone network (PSTN) 134 through a mobile switching services centre 132. A typical terminal 136 in the public switched telephone network 134 is a conventional or an ISDN (Integrated Services Digital Network) phone.

The invention is preferably implemented by software, in which case the invention requires fairly easy software changes to an accurately restricted area to the control unit 118 of the base station 100 and/or to the digital signal processing processor software of the transceiver 114 and/or to the control unit 124 of the base station controller 102. The necessary changes can thus be located in different places depending on how the software including functions and responsibilities is divided between the different parts of the base station system 126.

Figure 1 shows how space diversity is used on the radio connection 170 between the subscriber terminal 150 and the base station system 126. The highlighted line depicts how speech to be transferred travels from the cellular network subscriber terminal 150 to the conventional phone 136 connected to the public switched telephone network. Speech travels through the system at the air interface 170, from the antenna 112 to the first transceiver TRX1 114 and from there multiplexed in the multiplexer 116 along the transfer connection 160 to the group switching network 120, where a connection is formed to the output leading to the transcoder 122, and from the transcoder 122 speech is applied along the public switched telephone network 134 to the phone 136. The use of diversity is shown in such a manner that the radio connection 170 is also received through a second antenna 140, from where it is applied to the second transceiver TRX2 114.

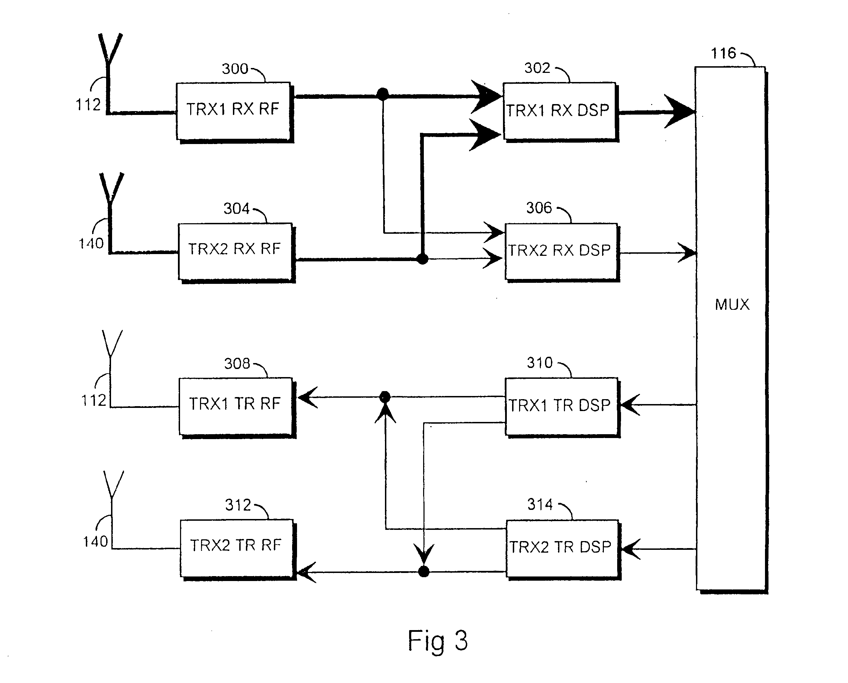

Figure 3 shows in more detail how space diversity can be applied, for example, in the base station 100. The radio frequency parts 230 of the first TRX1 and second TRX2 transceiver 114 are now divided into radio frequency parts 300 of the first transceiver, radio frequency parts 304 of the second transceiver, radio frequency parts 308 of the first transceiver and radio frequency parts 310 of the second transceiver. In reality the division is not necessarily so formal, for example, the synthesizer 212 is probably a common one between the transmitter and the receiver of the same transceiver. Correspondingly the digital signal processing processor including software is divided in both transceivers into a receiver signal processing processor 302, 306 and a transmitter signal processing processor 310, 314. Again in reality one efficient signal processing processor can be used whose capacity is divided between a transmitter and a receiver.

In accordance with the example in Figure 1 a signal received by the antenna 112 connected to the first transceiver TRX1 114 is applied to the radio frequency parts 300 of the first transceiver and from there onwards to the first receiver signal processing processor 302. The first receiver signal processing processor 302 also processes a signal received by the antenna 140 connected to the second transceiver TRX2 114, the signal first being applied to the second receiver radio frequency parts 304 and thereafter the digital form signal is applied to the first receiver signal processing processor 302. As shown in Figure 3 the corresponding connection can be performed also in reverse i.e. the processing can be performed in the second receiver signal processing processor 306.

Furthermore, it is obvious that space diversity can be utilized also in transmission, in which case the signal to be transmitted can be transmitted, for example, through the two antennas 112, 140, whereby the digital signal processing is performed either in the signal processing processor 310, 314 of either the first or the second transmitter, and the transmission itself is performed using the radio frequency parts 308, 312 of both the first and the second transmitter.

In accordance with the invention the use of space diversity on the radio connection 170 is regulated according to the quality of the radio connection 170. The quality of the radio connection 170 can be measured in all known ways, during and after the establishment of the radio connection 170, for example by measuring the C/I ratio, the bit error ratio or the received power of the received signal. Measurements can be performed both at the base station 100 and the subscriber terminal 150.

In one embodiment, if the base station system capacity allows it, space diversity is used on all radio connections 170, in which case the quality of the service offered is very good. At regular intervals the radio connections 170 are set at an order of superiority based on quality. When the space diversity capacity of the base station system 126 is fulfilled, space diversity can be reduced from the best radio connections 170, in which case the use of space diversity can be increased on poorer connections. This algorithm can naturally vary extensively according to circumstances. The services used by users, for example, normal speech transfer, data transfer and transfer of a moving video picture can be classified into categories requiring different quality levels, whereby more space diversity can be used for services requiring the best quality than for services requiring poorer quality.

If it is observed that only certain time slots of the TDMA frames need to use space diversity, it is also possible. This embodiment has the advantage that the improvement of connection quality achieved with space diversity can be accurately focused only on such radio connections 170 that need it. Then signal processing capacity of the base station 100 is saved.

In connection with the dynamic determination of space diversity, the use of power control can also be determined. If space diversity can increase signal resolution capacity, for example, by 5 dB, then the transmitting end can correspondingly reduce its transmission power, achieving the advantage that the total interference in a cellular network is reduced.

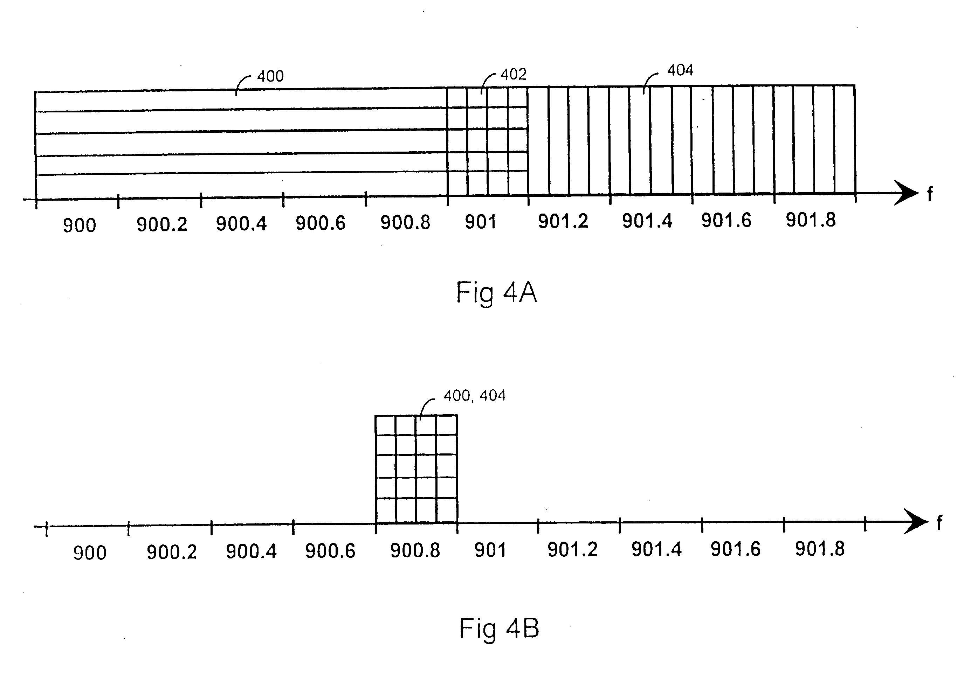

Figures 4A and 4B describe two different ways of implementing the use of space diversity. The examples employ the uplink frequency range (from the subscriber terminal 150 to the base station 100) part 900-901.8 MHz of the GSM system divided into channels that are 200 kHz wide. The examples are described with regard to the receiver, but the same procedure is used also with regard to the transmitter.

The solution in Figure 4A requires a software radio type approach. The receiver 114 is then arranged to receive a frequency band that is substantially wider than one channel. The first receiver 300 receives the frequency range 900-901 MHz, or a range 400 comprising six 200kHz channels. The received frequency band is afterwards digitally filtered onto the channels, which can then be conventionally processed. The second receiver 304 receives the frequency range 901-901.8 MHz, or a range 404 comprising five 200 kHz channels. Space diversity is achieved in such a way that a part of the frequency ranges overlap in the two different frequency ranges 400, 404. This overlapping frequency range 402 is preferably an area of the size of a multiple channel. In the example only one channel at frequency 901 MHz belongs to the frequency ranges of two different receivers 300, 304. The size of the overlapping range 402 is determined during the installation of the base station 100, and it is affected by, for example, the traffic amounts of the base station 100, the effect of the terrain on radio circumstances and economical realities. Space diversity can in a sense be obtained for free if redundant transceivers 114 are installed at the base station 100 in order to attain the mean time between failure (MTBF) into acceptable limits.

The example in Figure 4B shows a method regarding a conventional base station 100, in which the receivers 300, 304 receive narrowband, one channel wide, signals. Then if the receiver 300, 304 can be tuned to any frequency used by the base station 100, space diversity can be implemented, if so desired, on all channels used by the base station 100. In the example, both the first receiver 300 and the second receiver 304 are tuned to receive the same frequency range 400, 404. Then the procedure shown in Figure 3 is followed. This embodiment has the advantage that it can also be applied to the base stations using conventional transceivers 114.

Even though the invention has been described above with reference to the example of the accompanying drawings, it is obvious that the invention is not restricted thereto but can be modified in various ways within the scope of the inventive idea disclosed in the attached claims.

## Claims

1. A method for improving radio connection quality in a radio system comprising a base station system (126), a subscriber terminal (150) and a radio connection (170) using space diversity (space, angle, polarization, field diversity) between the base station system (126) and the subscriber terminal (150), dynamically determining the use of space diversity on the radio connection (170) according to the quality of the radio connection (170) so that the use of space diversity is increased as the quality of the radio connection (170) decreases and the use of space diversity is reduced as the quality of the radio connection (170) improves, **charac- terized** by the base station system (126) using at least two broadband transceivers (TRx1, TRx2) of a plurality of transceivers (114) each of the transceivers (TRx1, TRx2) being connected to an antenna (112 140) for a connection between a subscriber terminal (15C) and the base station (126), the overlapping area of the antennas (112, 140) and the overlapping frequency banels corresponding to multiple channels of the transceivers (TRx1, TRx2) allowing space diversity between the base station (126) and the terminal (15C) situated in the overlapping area by the use of the overlapping frequency band.

2. A method as claimed in claim 1, **characterized by** the dynamic determination comprising the steps of
using space diversity on each radio connection (170) when the capacity of the base station system (126) allows it,
arranging the radio connections (170) in order on the basis of their quality,
reducing space diversity from the best radio connections (170) and increasing space diversity on the poorest radio connections (170) when the space diversity capacity of the base station system (126) is fulfilled.

3. A method as claimed in any one of the preceding claims, **characterized by** the dynamic determination occurring when establishing the radio connection (170).

4. A method as claimed in any one of the preceding claims, **characterized by** the dynamic determination occurring during the radio connection (170).

5. A method as claimed in any one of the preceding claims, **characterized by** space diversity being independently used in each time slot of a TDMA frame.

6. A method as claimed in any one of the preceding claims, **characterized by** also determining the use of power control in connection with the dynamic determination of space diversity.

7. A base station system (126), the base station system being arranged to use space diversity (space, angle, polarization, field diversity) on a radio connection (170) to a subscriber terminal (150), the base station system (126) being arranged to dynamically determine the use of space diversity on the radio connection (170) according to the quality of the radio connection (170) so that the use of space diversity is increased as the quality of the radio connection (170) decreases and the use of space diversity is reduced as the quality of the radio connection (170) improves, **characterized by** the base station system (126) using at least two broadband transceivers (TRx1, TRx2) of a plurality of transceivers (114) each of the transceivers (TRx1, TRx2) being connected to an antenna (112 140) for a connection between a subscriber terminal (15C) and the base station (126), the overlapping area of the antennas (112, 140) and the overlapping frequency banels corresponding to multiple channels of the transceivers (TRx1, TRx2) allowing space diversity between the base station (126) and the terminal (15C) situated in the overlapping area by the use of the overlapping frequency band.

8. A base station system as claimed in claim 7, **characterized by** the base station system (126) being arranged to
use space diversity on each radio connection (170) when the radio system capacity allows it,
arrange the radio connections (170) in order on the basis of their quality,
reduce space diversity from the best radio connections (170) and to increase space diversity on the poorest radio connections (170) when the space diversity capacity of the base station system (126) is fulfilled.

9. A base station system as claimed in any one of the preceding claims 7-8, **characterized by** the base station system (126) being arranged to perform a dynamic determination when establishing the radio connection (170).

10. A base station system as claimed in any one of the preceding claims 7-8, **characterized by** the base station system (126) being arranged to perform the dynamic determination during the radio connection (170).

11. A base station system as claimed in any one of the preceding claims 7-10, **characterized by** the base station system (126) being arranged to use space diversity independently in each time slot of a TDMA frame.

12. A base station system as claimed in any one of the preceding claims 7-11, **characterized by** the base station system (126) being arranged to also employ power control when dynamically determining space diversity.

## Patentansprüche

1. Verfahren zum Verbessern der Funkverbindungsqualität in einem Funksystem umfassend ein Basisstationssystem (126), ein Teilnehmerendgerät (150) und eine Funkverbindung (170), die Raum-Diversity (Raum, Winkel, Polarisations-, Feld-Diversity) zwischen dem Basisstationssystem (126) und dem Teilnehmerendgerät (150) verwendet, wobei dynamisch die Verwendung des Raum-Diversity entsprechend der Qualität der Funkverbindung (170) bestimmt wird, sodass die Verwendung von Raum-Diversity erhöht wird wie die Qualität der Funkverbindung (170) abnimmt, und die Verwendung von Raum-Diversity reduziert wird wie die Qualität der Funkverbindung (170) sich verbessert, **dadurch gekennzeichnet, dass** das Basisstationssystem (126) wenigstens zwei Breitbandsende-/Empfangseinrichtungen (TRx1, TRx2) einer Vielzahl von Sende/Empfangseinrichtungen (114) verwendet, wobei jede der Sende/Empfangseinrichtungen (TRx1, TRx2) mit einer Antenne (112, 140) für eine Verbindung zwischen einem Teilnehmerendgerät (150) und der Basisstation (126) verbunden ist, wobei der überlappende Bereich der Antennen (112, 140) und die überlappenden Frequenzbänder, die mehreren Kanälen der Sende/Empfangseinrichtungen (TRx1, TRx2) entsprechen, Raum-Diversity zwischen der Basisstation (126) und dem Endgerät (150) ermöglichen, das in dem Überlappungsbereich durch die Verwendung des überlappenden Frequenzbands untergebracht ist.

2. Verfahren gemäß Anspruch 1, **dadurch gekennzeichnet, dass** das dynamische Bestimmen umfasst die Schritte des
Verwendens von Raum-Diversity auf jeder Funkverbindung (170), wenn die Kapazität des Basisstationssystems (126) es erlaubt,
Einrichtens der Funkverbindungen (170) in einer Ordnung basierend auf ihrer Qualität,
Verringern des Raum-Diversitys der besten Funkverbindungen (170) und des Erhöhens des Raum-Diversitys auf den schlechtesten Funkverbindungen (170), wenn die Raum-Diversity-Kapazität des Basisstationssystems (126) voll ausgelastet ist.

3. Verfahren nach einem der vorhergehenden Ansprüche, **dadurch gekennzeichnet, dass** das dynamische Bestimmen auftritt, wenn die Funkverbindung (170) aufgebaut wird.

4. Verfahren nach einem der vorhergehenden Ansprüche, **dadurch gekennzeichnet, dass** das dynamische Bestimmen während der Funkverbindung (170) auftritt.

5. Verfahren nach einem der vorhergehenden Ansprüche, **dadurch gekennzeichnet, dass** das Raum-Diversity unabhängig in jedem Zeitschlitz eines TDMA-Rahmens verwendet wird.

6. Verfahren nach einem der vorhergehenden Ansprüche, **dadurch gekennzeichnet, dass** außerdem die Verwendung von Leistungssteuerung in der Verbindung mit der dynamischen Bestimmung des Raums-Diversitys bestimmt wird.

7. Basisstationssystem (126), wobei das Basisstationssystem eingerichtet ist, Raum-Diversity (Raum-, Winkel-, Polarisations-, Feld-Diversity) auf einer Funkverbindung (170) zu einem Teilnehmerendgerät (150) zu verwenden, wobei das Basisstationssystem (126) eingerichtet ist, dynamisch die Verwendung des Raum-Diversity auf der Funkverbindung (170) entsprechend der Qualität der Funkverbindung (170) zu bestimmen, sodass die Verwendung des Raum-Diversity erhöht wird wie die Qualität der Funkverbindung (170) sich verringert, und die Verwendung des Raum-Diversity reduziert wird wie die Qualität der Funkverbindung (170) sich verbessert, **dadurch gekennzeichnet, dass** das Basisstationssystem (126) wenigstens zwei Breitbandsende-/Empfangseinrichtungen (TRx1, TRx2) einer Vielzahl von Sende/Empfangseinrichtungen (114) verwendet, wobei jede der Sende/Empfangseinrichtungen (TRx1, TRx2) mit einer Antenne (112, 140) für eine Verbindung zwischen einem Teilnehmerendgerät (150) und der Basisstation (126) verbunden ist, wobei der überlappende Bereich der Antennen (112, 140) und die überlappenden Frequenzbänder, die mehreren Kanälen der Sende/Empfangseinrichtungen (TRx1, TRx2) entsprechen, Raum-Diversity zwischen der Basisstation (126) und dem Endgerät (150) ermöglichen, das in dem Überlappungsbereich durch die Verwendung des überlappenden Frequenzbands untergebracht ist.

8. Basisstationssystem gemäß Anspruch 7, **dadurch gekennzeichnet, dass** das Basisstationssystem (126) eingerichtet ist,
Raum-Diversity auf jeder Funkverbindung (170) zu verwenden, wenn die Funksystemkapazität es zulässt,
die Funkverbindungen (170) in einer Ordnung basierend auf ihrer Qualität einzurichten,
Raum-Diversity von den besten Funkverbindungen (170) zu verringern und Raum-Diversity auf den schlechtesten Funkverbindungen (170) zu erhöhen, wenn die Raum-Diversity-Kapazität des Basisstationssystems (126) voll ausgelastet ist.

9. Basisstationssystem nach einem der vorhergehenden Ansprüche 7 bis 8, **dadurch gekennzeichnet, dass** das Basisstationssystem (126) eingerichtet ist, eine dynamische Bestimmung durchzuführen, wenn es die Funkverbindung (170) aufbaut.

10. Basisstationssystem gemäß einem der vorhergehenden Ansprüche 7 bis 8, **dadurch gekennzeichnet, dass** das Basisstationssystem (126) eingerichtet ist, die dynamische Bestimmung während der Funkverbindung (170) durchzuführen.

11. Basisstationssystem gemäß einem der vorhergehenden Ansprüche 7 bis 10, **dadurch gekennzeichnet, dass** das Basisstationssystem eingerichtet ist, Raum-Diversity unabhängig in jedem Zeitschlitz eines TDMA-Rahmens zu verwenden.

12. Basisstationssystem gemäß einem der vorhergehenden Ansprüche 7 bis 11, **dadurch gekennzeichnet, dass** das Basisstationssystem (126) eingerichtet ist, außerdem Leistungssteuerung zu verwenden, wenn es das Raum-Diversity dynamisch bestimmt.

## Revendications

1. Procédé destiné à améliorer la qualité d'une connexion radio dans un système radio comprenant un système de station de base (126), une borne d'abonné (150) et une connexion radio (170) utilisant la diversité spatiale (espace, angle, polarisation, diversité de champ) entre le système de station de base (126) et la borne d'abonné (150), déterminant dynamiquement l'utilisation de la diversité spatiale sur la connexion radio (170) selon la qualité de la connexion radio (170) de sorte que l'utilisation de la diversité spatiale soit accrue lorsque la qualité de la connexion radio (170) décroît et que l'utilisation de la diversité spatiale soit réduite lorsque la qualité de la connexion radio (170) est améliorée, **caractérisé en ce que** le système de station de base (126) utilisant au moins deux émetteurs récepteurs à large bande (TRx1, TRx2) parmi une pluralité d'émetteurs récepteurs (114), chacun des émetteurs récepteurs (TRx1, TRx2) étant relié à une antenne (112, 140) pour une connexion entre une borne d'abonné (150) et la station de base (126), la zone de chevauchement des antennes (112, 140) et les bandes de fréquences chevauchantes correspondant aux multiples canaux des émetteurs récepteurs (TRx1, TRx2) permettant la diversité spatiale entre la station de base (126) et la borne (150) située dans la zone de chevauchement par utilisation de la bande de fréquences chevauchante.

2. Procédé selon la revendication 1, **caractérisé en ce que** la détermination dynamique comprend les étapes consistant à :
utiliser la diversité spatiale sur chaque connexion radio (170) lorsque la capacité du système de station de base (126) le permet,
agencer les connexions radio (170) dans l'ordre, sur la base de leur qualité,
réduire la diversité spatiale à partir des meilleures connexions radio (170) et accroître la diversité spatiale sur les connexions radio les plus pauvres (170) lorsque la capacité de diversité spatiale du système de station de base (126) est remplie.

3. Procédé selon l'une quelconque des revendications précédentes, **caractérisé en ce que** la détermination dynamique intervient lors de l'établissement de la connexion radio (170).

4. Procédé selon l'une quelconque des revendications précédentes, **caractérisé en ce que** la détermination dynamique intervient au cours de la connexion radio (170).

5. Procédé selon l'une quelconque des revendications précédentes, **caractérisé en ce que** la diversité spatiale est utilisée de manière indépendante dans chaque tranche de temps d'une trame d'accès multiple par répartition dans le temps (TDMA).

6. Procédé selon l'une quelconque des revendications précédentes, **caractérisé en ce qu'**il détermine également l'utilisation du réglage de la puissance conjointement avec la détermination dynamique de la diversité spatiale.

7. Système de station de base (126), ledit système de station de base étant agencé pour utiliser la diversité spatiale (espace, angle, polarisation, diversité de champ) sur une connexion radio (170) vers une borne d'abonné (150), le système de station de base (126) étant agencé pour déterminer dynamiquement l'utilisation de la diversité spatiale sur la connexion radio (170) selon la qualité de la connexion radio (170) de sorte que l'utilisation de la diversité spatiale soit accrue lorsque la qualité de la connexion radio (170) diminue, et que l'utilisation de la diversité spatiale soit réduite lorsque la qualité de la connexion radio (170) est améliorée, **caractérisé en ce que** le système de station de base (126) utilisant au moins deux émetteurs récepteurs à large bande (TRx1, TRx2) parmi une pluralité d'émetteurs récepteurs (114), chacun des émetteurs récepteurs (TRx1, TRx2) étant relié à une antenne (112, 140) pour une connexion entre une borne d'abonné (150) et la station de base (126), la zone de chevauchement des antennes (112, 140) et les bandes de fréquences chevauchantes correspondant aux multiples canaux des émetteurs récepteurs (TRx1, TRx2) permettant la diversité spatiale entre la station de base (126) et la borne (150) située dans la zone de chevauchement par utilisation de la bande de fréquences chevauchante.

8. Système de station de base selon la revendication 7, **caractérisé en ce que** le système de station de base (126) est prévu pour
utiliser la diversité spatiale sur chaque connexion radio (170) lorsque la capacité du système radio le permet,
agencer les connexions radio (170) dans l'ordre de, sur la base de leur qualité,
réduire la diversité spatiale à partir des meilleures connexions radio (170) et accroître la diversité spatiale sur les connexions radio les plus pauvres (170) lorsque la capacité de diversité spatiale du système de station de base (126) est remplie.

9. Système de station de base selon l'une quelconque des revendications précédentes 7 et 8, **caractérisé en ce que** le système de station de base (126) est agencé pour effectuer une détermination dynamique lorsqu'il établit la connexion radio (170).

10. Système de station de base selon l'une quelconque des revendications précédentes 7 et 8, **caractérisé en ce que** le système de station de base (126) est agencé pour effectuer la détermination dynamique au cours de la connexion radio (170).

11. Système de station de base selon l'une quelconque des revendications précédentes 7 à 10, **caractérisé en ce que** le système de station de base (126) est agencé pour utiliser la diversité spatiale de manière indépendante dans chaque tranche de tempsd'une trame d'accès multiple par répartition dans le temps.

12. Système de station de base selon l'une quelconque des revendications précédentes 7 à 11, **caractérisé en ce que** le système de station de base (126) est agencé pour employer également le réglage de la puissance lorsqu'il détermine dynamiquement la diversité spatiale.
